# EUROPEAN PATENT SPECIFICATION

(11) **EP 1 580 090 B1**
(45) Date of publication and mention of the grant of the patent: **05.12.2007**
(21) Application number: 04254459.3
(22) Date of filing: 26.07.2004
(51) Int. Cl.: B60R 22/26, B60R 22/195, B60R 22/02

(54) **Belt pretensioner**
Gurtstraffer
Prétensionneur de ceinture

(30) Priority: 22.03.2004 EP 04251646; 11.06.2004 EP 04253510
(43) Date of publication of application: 28.09.2005
(73) Proprietor: KEY SAFETY SYSTEMS, INC., Sterling Heights, MI 48314 (US)
(72) Inventor: Bell, John, Carlisle Cumbria CA2 6QU (GB); Jack, Brian A., Dumfiesshire DG12 6PR Scotland (GB); Blackadder, David, Carlisle Cumbria CA4 8QG (GB)
(74) Representative: Freeman, Jacqueline Carol

(56) References cited:
- WO-A-95/31359
- FR-A- 2 765 537
- US-B1- 6 213 513

## Description

The present invention relates to a pretensioner and particularly to a pretensioner for a vehicle safety restraint mechanism such as a seat belt.

Traditionally a seat belt safety restraint comprises a length of belt webbing connected at three points to load bearing parts of a vehicle. Typically one end is bolted to a door sill on one side of the seat, arranged to pass laterally across the hips of the seat occupant to a buckle mechanism fixed to the vehicle on the opposite side of the seat, and then diagonally across the torso of the occupant to a further fastening point on the B pillar of the door. The buckle mechanism engages a buckle tongue slidably attached to the webbing.

To increase comfort for the occupant restrained by the belt, a retractor is fitted at the pillar end of the webbing. This allows the webbing to pay out under relatively low loads to enable limited movement of the restrained occupant, for example to reach in-car entertainment controls or storage compartments. The retractor is biased to keep the webbing relatively taut about the occupant and a locking element is included to lock the retractor against webbing pay out in the event of a dangerous situation being detected. For example, an acceleration sensor activates if the vehicle undergoes rapid acceleration or deceleration indicative of a crash.

In recent years, pretensioners have been introduced to rapidly pull in a length of webbing to actively tighten the belt about the vehicle occupant in the event of a crash condition being sensed. This takes up any slack which may have developed in the belt and helps to more correctly position the occupant in the seat to maximise the effect of the belt protection and of any secondary safety restraint such as an air bag.

Pretensioners comprise a force reservoir such as a pyrotechnically operated gas generator to provide an impulse of sufficient magnitude to tighten the belt in a short space of time, ideally before the crash pulse takes full effect. A typical known pretensioner may use rotational means to wind in a length of seat belt webbing, for example by rotating the retractor spool in a webbing rewind direction to take in the required length of webbing prior to the retractor locking against webbing pay out.

Some examples of known pretensioning mechanisms are shown in US 6 213 513 and FR 2 765 537. These are buckle pretensioners in which the buckle head is attached to one end of a flexible cable. The closest known prior art is US 6 213 513 in which the other end of the cable is looped around a piston which moves inside and along a cylinder to draw back the buckle. In FR 2 765 537 the other end of the cable is anchored to a seat and the cable is pulled aside in a generally perpendicular direction compared to the line of the cable.

WO 95/31359 shows a seat anchorage for a rear seat, which uses a bobbin moving a slider bar to adjust the position of the anchorage but does not suggest the use of this in the field of pretensioning.

Known pretensioners tend to be bulky, and are particularly difficult to use for the driver, and front passenger, seat of a three door vehicle because of the requirement to allow access to the rear of the vehicle past the front seats. Using a traditional retractor pretensioner mechanism in a front seat of a three door vehicle causes an unacceptable obstruction.

Seat travel is greater in a three door vehicle than in a four door vehicle in order to provide such access and to accommodate this the door sill end of the webbing is usually attached to a so-called slider bar of well known design, instead of being fixedly bolted to the floor. This allows the sill end of the webbing to be moved longitudinally forward and rearward to facilitate rear seat access and front seat movement.

The present invention provides an improved pretensioning mechanism which can be used in three-door, front seat applications.

According to the present invention there is provided a pretensioner for a three point vehicle safety restraint seat belt, comprising the features of claim 1.

Further details of the invention are outlined in the dependent claims.

Pretensioners can be constructed according to the invention which have reduced or eliminated obstruction to rear seat access, smaller package sizes and which are attached to an appropriate sill anchorage zone.

For a better understanding of the present invention, and to show how the same may be carried into effect, reference will now be made, by way of example, to the accompanying drawings, in which:
Figure 1 is a schematic side view of a pretensioner according to one embodiment not part of the present invention;
Figure 2 is an enlarged view of part of the pretensioner of figure 1 before pretensioning;
Figure 3 is an enlarged view of part of the pretensioner of figure 1 after pretensioning;
Figure 4 is a side view of an alternative arrangement of the pretensioner of figure 1;
Figure 5 is an enlarged perspective view of the carriage and rail arrangement of figure 1;
Figure 6 is a schematic side view of an alternative pretensioner;
Figure 7 is a side view of a pretensioner according to an embodiment of the present invention;
Figure 8 is a perspecive view of the pretensioner of Figure 7.
Figure 9 is a perspective view of a pretensioner according to another embodiment of the present invention.

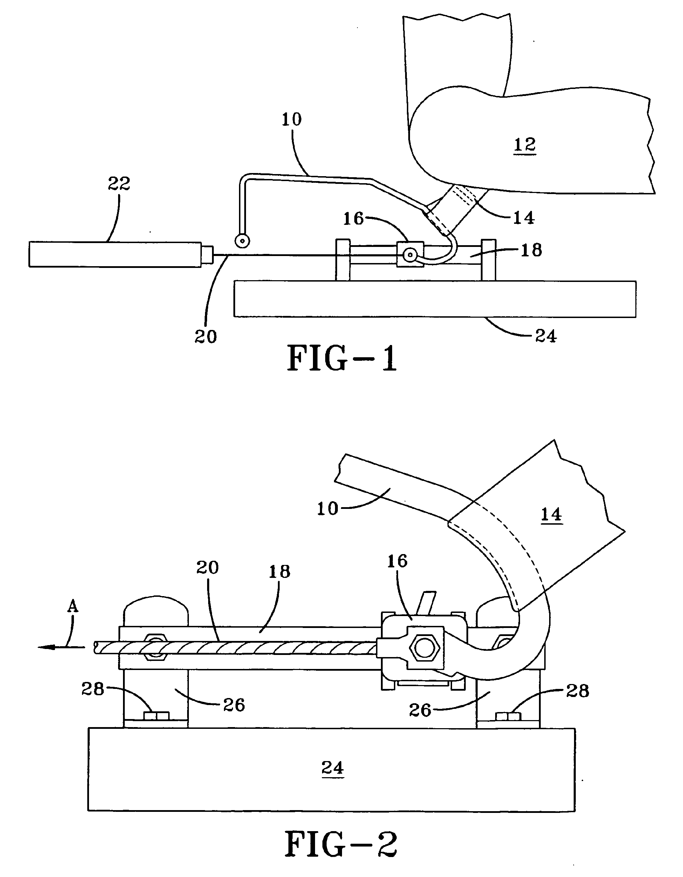

In the first embodiment of figure 1, a slider bar 10 is positioned adjacent to a front seat 12 of a vehicle. One end of seat belt webbing 14 passes around the slider bar 10 and is free to move back and forth along the slider bar 10.

The seat belt webbing 14 is of a conventional design and is attached at one end to a retractor mounted, adjacent a seat, to a load bearing part of the vehicle such as a vehicle side pillar (not shown). The webbing passes through a shoulder support also attached to the side pillar and has a buckle tongue, which is insertable into a buckle (not shown) located on the other side of the seat.

When in use, the seat belt webbing 14 is at one end of the slider bar 10 in the load bearing position shown in Fig. 1 . When the seat belt is not in use the end of the webbing 14 may be moved in a rearward direction along the slider bar 10 so that it does not obstruct access to the rear seat of the vehicle.

One end of the slider bar 10 is attached to a carriage 16 which is mounted on a rail 18. A cable 20 extends between the carriage 16 and a pyrotechnic unit 22. The pyrotechnic unit 22 is of a known type and contains a piston within a cylindrical housing and a gas generator. The gas generator is pyrotechnically activated to provide an impulse which forces the piston in a rearward direction and tensions the cable 20.

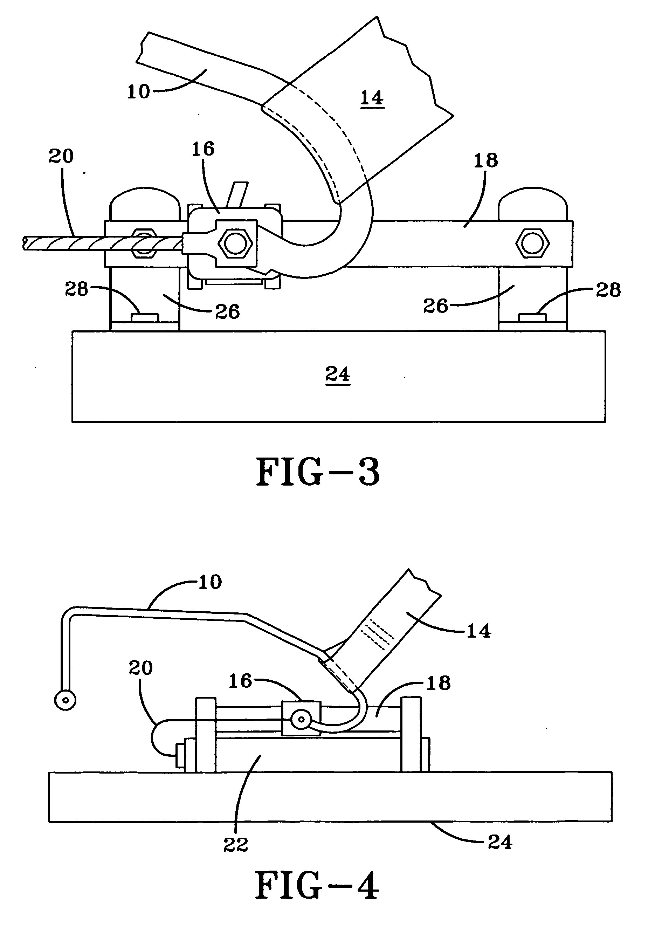

Figure 2 shows one arrangement of the carriage 16 and the rail 18 in greater detail. The rail 18 is attached at each end to support members 26 which are fixed to a load bearing chassis member 24 by means of bolts 28. Such a load bearing chassis member 24 may be a chassis member extending in a longitudinal direction down each side of the vehicle, or a load bearing door sill and provides a suitable load bearing anchorage zone for the slider bar 10 adjacent to and slightly to the rear of each of the vehicle doors.

Prior to pretensioning, the carriage 16 is positioned for normal use of the seat belt webbing 14 at its forward most position, at the right hand side as shown in figure 2 of the rail 18. Upon sensing an acceleration of the vehicle above a predetermined criteria, a crash sensor, in known manner, generates a signal indicative of a crash condition which causes the pyrotechnic unit 22 to fire, creating a tension in the metal cable 20. The tension in the cable 20 pulls the carriage 16 and the slider bar 10 in a rearward direction i.e. the direction of arrow A in figure 2. The carriage 16 can be arranged to move rearwardly a distance in the region of 50 to 150 mm depending on the vehicle size and requirements.

The sudden movement of the slider bar 10 in a rearward direction provides tension in the seat belt webbing 14, which takes up any slack in the webbing 14 and pulls an occupant backwards into the seat 12 so as to correctly position the occupant within the seat 12 in order to maximise the benefit of the seat belt and correctly position him for maximum effect of any secondary restraint such as an air bag.

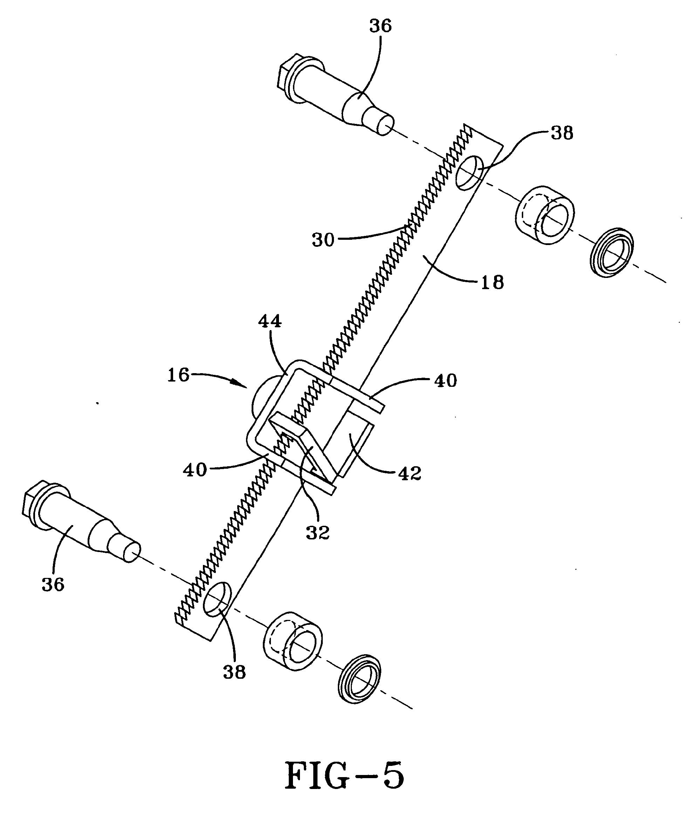

Figure 3 shows the position of the carriage immediately after pretensioning. After the pyrotechnic unit has fired, the carriage 16 is prevented from returning to its original position under the forward momentum of the occupant during a crash, by a ratchet mechanism within the carriage forming the second member 16. This ratchet mechanism is is shown more clearly in figure 5, described later.

In figure 5 the ratchet mechanism is shown. The rail 18 is attached at each of its ends to respective support members 26 by means of bolts 36 passing through cylindrical holes 38 at each end of the rail 18. Locking ratchet teeth 30 are formed in one surface of the rail 18. The carriage 16 has two end plates 40 and a base plate 42 attached to a side wall 44. A locking lever 32 extends from the base plate 42. Each of the end plates 40 and the locking lever 32 have a slot, allowing the rail 18 to pass through the centre of the carriage 16.

An inner surface of the locking lever 32 is in contact with the teeth 30 in the surface of the rail 18 and is orientated at an angle such that the locking lever 32 can pass over the teeth 30 in one direction. However the locking lever 32 is biased such that if it tries to move in the opposite direction, a locking edge of the inner surface of the locking lever 32 will be caught against a tooth 30 on the upper surface of the rail 18 and thus prevents the carriage 16 from sliding in a reverse direction. To facilitate this the teeth 30 may be of a saw-tooth form.

The slider bar 10, the carriage 16 and ratchet mechanism, the rail 18, the support members 26 and the bolts 28 and 36 are all preferably made of metal. The ratchet mechanism and the carriage 16 may be formed from both parts of a height adjuster traditionally used to alter the height of the belt shoulder support.

In figure 4 the pyrotechnic unit is shown stored beneath the rail 18 and the bolts 36 and corresponding holes 38 in the rail may be used to fix the pyrotechnic unit 22 in relation to the rail 18. The operation of the pretensioner in figure 4 is substantially the same as that shown in figure 1, except that the cable 20 bends 180° in order to cater for the different orientation of the pyrotechnic unit 22.

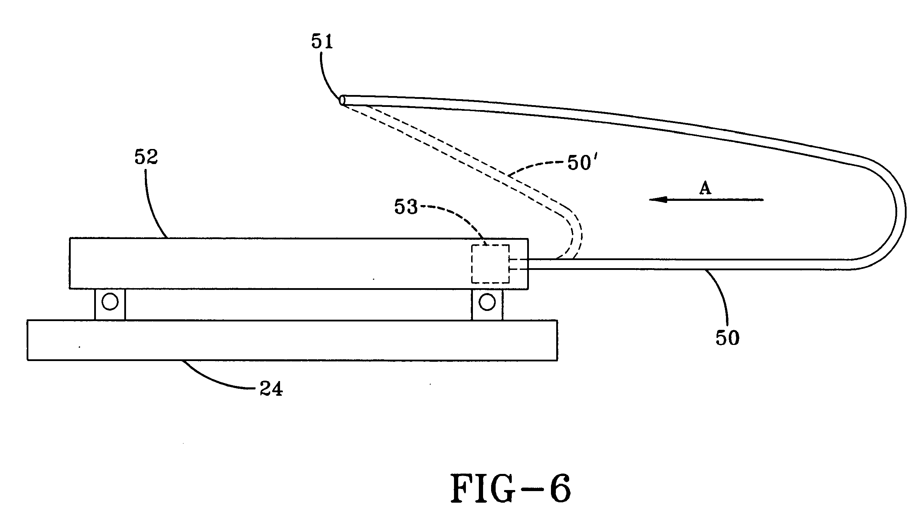

Figure 6 shows a second embodiment in which the slider bar of the first embodiment is effectively replaced by a flexible cable 50.

The seat belt webbing (not shown) is looped round the cable 50 in the same manner as with the slider bar 10 of figure 1 and the cable provides similar versatility of movement for the webbing mounting, and at least the same degree of access to rear seats.

One end 51 of the cable 50 is fixedly attached to a load bearing part of the vehicle such as the sill, and the other end is attached to a piston 53 of a piston-cylinder pyro unit 52 which is fixed to a load bearing part of the vehicle such as the floor of the vehicle, particularly so as to retain the door profile and avoid inhibiting access through the door.

The cable 50 forms a loop profile as shown in the figure and can be encouraged to hold such a profile in normal use by retaining clips or by a plastic coating. Alternatively a flexible tube may cause the cable 50 to increase its stiffness to the appropriate degree.

When a crash sensor indicates that a sudden deceleration or acceleration is taking place, the pyro unit 52 is pyrotechnically activated to release gas to push the piston along the cylinder in the direction of arrow A, causing the cable 50 to retract to the profile indicated by the broken line 50'. This causes the seat belt webbing mounting on the cable 50 to be pulled back in the direction of arrow A thus effecting the required pretensioning exercise.

A ratchet, or other form of non-return mechanism may be built into the pyro unit 52.

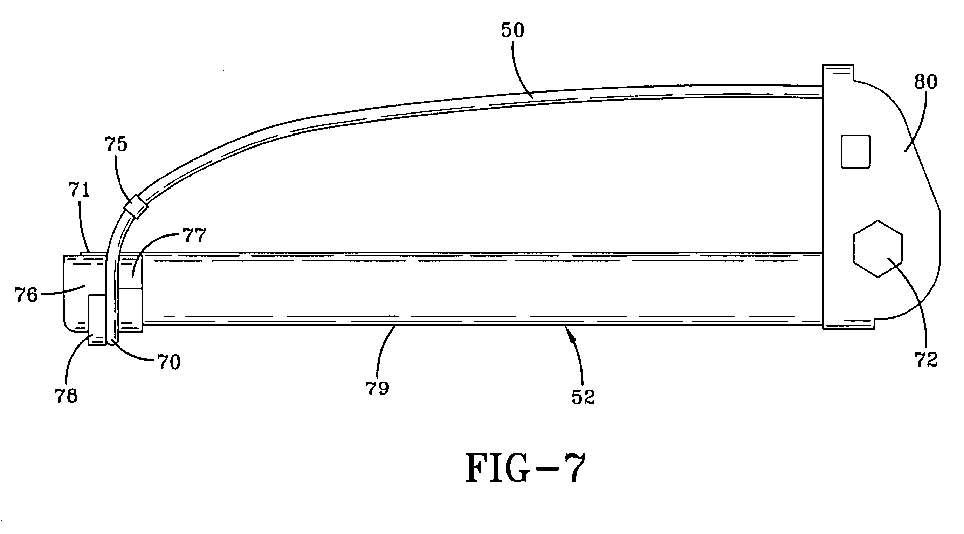

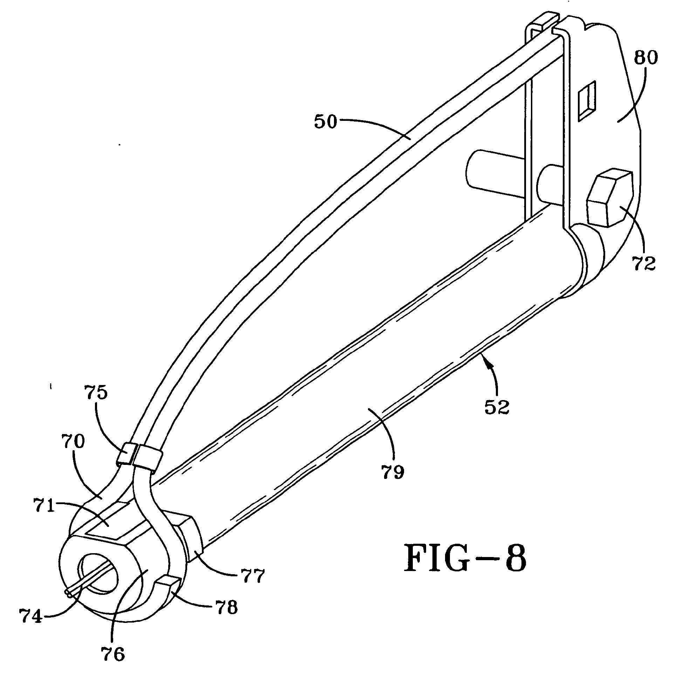

Figures 7 and 8 show an embodiment of the invention in which the cable 50 is formed as a double cable and the free end is formed as a loop 70 which is hooked over the end 71 of the cylinder 79 of the pyro unit 52. The loop 70 is fixed to the end 71 of the cylinder 79 by a shearable or mechanically releasable connection which in figures 7 and 8 is shown as a plastics attachment 76 fitted over the end 71, with restraining abutments 77 and 78 on either side of the cable 50. The abutment 77 shears when the cable 50 applies more than a predetermined force, releasing the loop 70 to slide along the cylinder of the pretensioner. Other suitable forms of means for fixing the loop 70 to the end of the cylinder will be evident to a person skilled in the art.

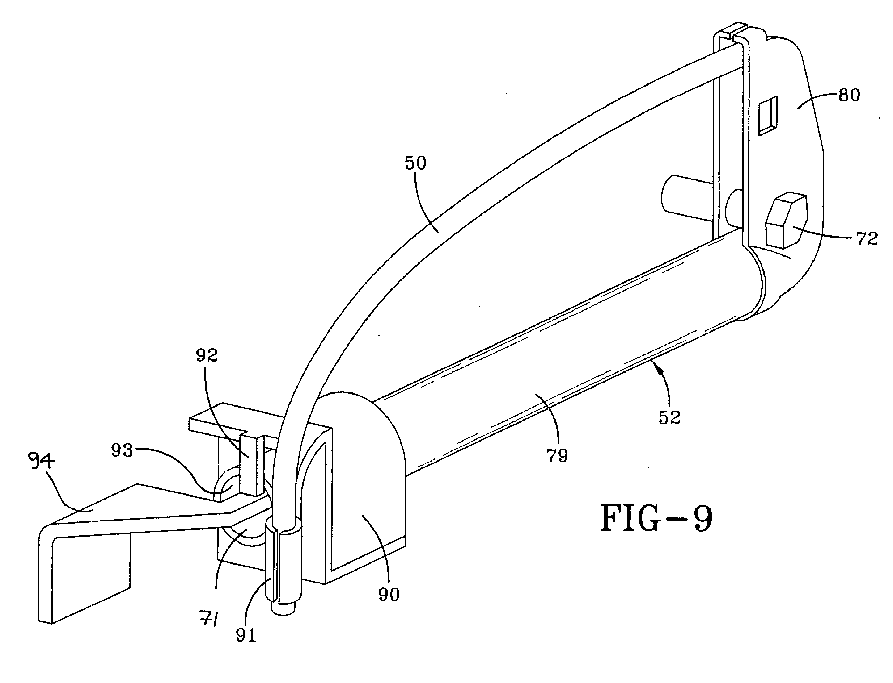

In Figure 7 the pyro unit 52 is fixed to a load bearing part of a vehicle, such as a sill or other load bearing beam, by a screw fixing 72 through a mounting 80 at the piston end of the cylinder 79 and a location feature (not shown) at the free end 71 of the cylinder. The location feature locates in the end of the unit 52 and must conform to the standards of the Vehicle Anchorage Pull Test, currently known as the R14 specification, requiring it to be strong enough to withstand loads of at least 15kn. Suitable location features will be evident to persons skilled in the art, and one is shown in figure 9 described below.

The cable loop 70 may be encased in a plastics tube so as to more easily slide along the cylinder 79. In addition a tie or plastics tube 75 encases a section of the cable spaced from the loop 70 so as to hold the double cable together. This plastics tube 75 may be longer than illustrated in figures 7 and 8 so as to also protect the fabric of a seat belt from chaffing by the cable. A pair of wires 74 is shown exiting from the end 71 of the cylinder 79. These are for actuation of the pyro unit 52 and could exit the cylinder at another point.

In Figure 8, the pretensioner of Figure 7 is shown in perspective view and the loop 70 is clearly shown. Like parts are indicated with like reference numbers.

In Figure 9 a another embodiment of the invention is shown in which the cable 50 is a single cable and is attached to a carriage 90 which will slide along the cylinder 79 when the pretensioner is activated. The cable 50 is fixed to the carriage 90 by welding in a housing 91 mounted on the carriage 90. The carriage 90 is retained at the end of the pyro unit 52 by a tongue 92 on the carriage 90 fitting into a recess 93 on the cylinder 79. When the pyro unit 52 activates, the pull on the cable will be sufficient to shear this tongue 92 and allow the carriage 90 to travel along the cylinder 79, pulling the seat belt in a pretensioning direction. Alternatively the tongue 92 can be arranged to bend to effect release of the carriage from the recess 93. A further alternative would be to use a mechanically releasable mechanism.

In Figure 9 the location feature is shown as a bracket 94 fitting into the end of the cylinder 79, which can be bolted or screwed to a load bearing part of the vehicle.

Alternatively a carriage mechanism similar to that illustrated in Figure 5 could be used.

Of course elements of the embodiments described may be combined. For example the cable 50 could be attached to an arrangement such as the carriage 16 sliding on the rail 18, of figure 1. The pyro unit 52 could then be connected to the carriage 16 by another cable such as 20 in figure 1 and be mounted either in line with, or below, the rail 18.

However, the invention is defined by the appended claims.

## Claims

1. A pretensioner for a three point vehicle safety restraint seat belt, comprising:
a cylinder (79) adapted to be fixed to a load bearing part of the vehicle, the cylinder (79) housing a piston,
a flexible member (50) being attached to one end of the seat belt and having a first end connected to and pullable by the piston;
a means for moving the piston (53) translationally relative to the cylinder (79) in response to activation of a crash sensor;
**characterised by** the flexible member (50) having a second end connected to the cylinder (79), such that when the piston (53) moves translationally relative to the cylinder (79) the second end of the flexible member moves translationally along the cylinder and pulls said end of the seat belt (14) in a pretensioning direction.

2. A pretensioner for a three point vehicle safety restraint seat belt according to claim 1 wherein the flexible member is a cable (50).

3. A pretensioner for a three point vehicle safety restraint seat belt according to either of claims 1 or 2 wherein a loop (70) is located at the second end of the flexible member (50), the loop extending around the exterior of the cylinder (79) and connected to the cylinder (79) by a shearable element (77) or a mechanically releasable element that shears or is released to allow the loop (70) of the flexible member (50) to move along the exterior of the cylinder when the first end of the flexible member is pulled by the piston (53).

4. A pretensioner for a three point vehicle safety restraint seat belt according to either of claims 1 or 2 wherein the second end of the flexible member (50) is attached to a carriage (90) located on the exterior of the cylinder (79) and secured to the cylinder (79) by a tongue (92) such that when the piston (53) pulls the first end of the flexible member (50) the tongue (92) shears to allow the carriage (90) to move along the exterior of the cylinder.

5. A pretensioner for a three point vehicle safety restraint seat belt according to any of claims 1 to 4 further comprising a means for restraining motion of the flexible member in a non-pretensioning direction.

6. A pretensioner for a three point vehicle safety restraint seat belt according to any of claims 1 to 5 wherein the means (52) for moving the piston (53) is a pyrotechnic unit.

## Patentansprüche

1. Gurtstraffer für einen Dreipunkt-Sicherheitsgurt eines Fahrzeugs, der Folgendes umfasst:
einen Zylinder (79) zur Befestigung an einem tragenden Teil des Fahrzeugs, wobei sich im Zylinder (79) ein Kolben befindet,
ein flexibles Element (50), das an einem Ende des Sitzgurtes angebracht ist und mit einem ersten Ende das mit dem Kolben verbunden ist und von ihm gezogen werden kann,
ein Mittel zum Bewegen des Kolbens (53) translational relativ zum Zylinder (79) als Reaktion auf die Aktivierung eines Crash-Sensors,
**dadurch gekennzeichnet, dass** das flexible Element (50) mit einem zweiten Ende so mit dem Zylinder (79) verbunden ist, dass, wenn sich der Kolben (53) translational relativ zum Zylinder (79) bewegt, das zweite Ende des flexiblen Elements sich translational am Zylinder entlang bewegt und das genannte Ende des Sitzgurtes (14) in einer Gurtstraffungsrichtung zieht.

2. Gurtstraffer für einen Dreipunkt-Sicherheitsheitsgurt eines Fahrzeugs nach Anspruch 1, bei dem das flexible Element ein Kabel (50) ist.

3. Gurtstraffer für einen Dreipunkt-Sicherheitsgurt eines Fahrzeugs nach einem der Ansprüche 1 und 2, bei dem sich am zweiten Ende des flexiblen Elements (50) eine Schlinge (70) befindet, wobei die Schlinge um das Äußere des Zylinders (79) herum verläuft und mit dem Zylinder (79) durch ein scherfähiges Element (77) oder ein mechanisch lösbares Element verbunden ist, das abschert oder gelöst wird, damit die Schlinge (70) des flexiblen Elements (50) sich am Äußeren des Zylinders entlang bewegen kann, wenn das erste Ende des flexiblen Elements vom Kolben (53) gezogen wird.

4. Gurtstraffer für einen Dreipunkt-Sicherheitsgurt eines Fahrzeugs nach einem der Ansprüche 1 und 2, bei dem das zweite Ende des flexiblen Elements (50) an einem Schlitten (90) angebracht ist, der sich am Äußeren des Zylinders (79) befindet und mit einer Zunge (92) so am Zylinder (79) befestigt ist, dass, wenn der Kolben (53) am ersten Ende des flexiblen Elements (50) zieht, die Zunge (92) abschert, so dass der Schlitten (90) sich am Äußeren des Zylinders entlang bewegen kann.

5. Gurtstraffer für einen Dreipunkt-Sicherheitsgurt eines Fahrzeugs nach einem der Ansprüche 1 bis 4, der ferner ein Mittel zum Hemmen der Bewegung des flexiblen Elements in einer Gurtnichtstraffungsrichtung umfasst.

6. Gurtstraffer für einen Dreipunkt-Sicherheitsgurt eines Fahrzeugs nach einem der Ansprüche 1 bis 5, bei dem das Mittel (52) zum Bewegen des Kolbens (53) eine pyrotechnische Einheit ist.

## Revendications

1. Dispositif de prétension pour une ceinture de sécurité à trois points de fixation d'un véhicule, comprenant :
un cylindre (79) adapté pour être fixé sur une partie de support de la charge du véhicule, le cylindre (79) contenant un piston ;
un élément flexible (50) fixé sur une extrémité de la ceinture de sécurité et comportant une première extrémité connectée au piston et pouvant être entraînée par celui-ci ;
un moyen pour déplacer le piston (53) par translation par rapport au cylindre (79) en réponse à l'actionnement d'un capteur de collision ;
**caractérisé en ce que** l'élément flexible (50) comporte une deuxième extrémité connectée au cylindre (79), de sorte que lors du déplacement par translation du piston (53) par rapport au cylindre (79), la deuxième extrémité de l'élément flexible se déplace par translation le long du cylindre et entraîne ladite extrémité de la ceinture de sécurité (14) dans une direction de prétension.

2. Dispositif de prétension pour une ceinture de sécurité à trois points de fixation d'un véhicule selon la revendication 1, dans lequel l'élément flexible est constitué par un câble (50).

3. Dispositif de prétension pour une ceinture de sécurité à trois points de fixation d'un véhicule selon les revendications 1 ou 2, dans lequel une boucle (70) est agencée au niveau de la deuxième extrémité de l'élément flexible (50), la boucle s'étendant autour de l'extérieur du cylindre (79) et étant connectée au cylindre (79) par un élément à cisaillement (77) ou un élément à dégagement mécanique, cisaillé ou dégagé pour permettre le déplacement de la boucle (70) de l'élément flexible (50) le long de l'extérieur du cylindre lors de la traction de la première extrémité de l'élément flexible par le piston (53).

4. Dispositif de prétension pour une ceinture de sécurité à trois points de fixation d'un véhicule selon les revendications 1 ou 2, dans lequel la deuxième extrémité de l'élément flexible (50) est fixée sur un chariot (90) agencé sur l'extérieur du cylindre (79) et fixée sur le cylindre (79) par une languette (92), de sorte que lors de la traction de la première extrémité de l'élément flexible (50) par le piston (53), la languette (92) est soumise à un cisaillement pour permettre le déplacement du chariot (90) le long de l'extérieur du cylindre.

5. Dispositif de prétension pour une ceinture de sécurité à trois points de fixation d'un véhicule selon l'une quelconque des revendications 1 à 4, comprenant en outre un moyen pour empêcher le déplacement de l'élément flexible dans une direction de non prétension.

6. Dispositif de prétension pour une ceinture de sécurité à trois points de fixation d'un véhicule selon l'une quelconque des revendications 1 à 5, dans lequel le moyen (52) de déplacement du piston (53) est constitué par une unité pyrotechnique.
